# EUROPEAN PATENT APPLICATION

(11) **EP 4 733 636 A1**
(43) Date of publication of application: **29.04.2026**
(21) Application number: 24853712.8
(22) Date of filing: 09.08.2024
(51) Int. Cl.: F16J 15/06, F16K 31/06

(54) **WATERPROOF STRUCTURE AND ELECTROMAGNETIC VALVE**

(30) Priority: 11.08.2023 CN 202322171934 U
(71) Applicant: Zhejiang Dunan Artificial Environment Co., Ltd., Shaoxing Zhejiang 311835 (CN)
(72) Inventor: XIAO, Changjun, Shaoxing, Zhejiang 311835 (CN); CAI, Bin, Shaoxing, Zhejiang 311835 (CN)
(74) Representative: Zacco GmbH
(86) International application number: PCT/CN2024/111175
(87) International publication number: WO 2025/036303

(57) **Abstract**

A waterproof structure and a electromagnetic valve. The waterproof structure includes: a waterproof protrusion (40), having an internal fitting surface (41) facing an electrical connection region (30); wherein the waterproof protrusion (40) is arranged on an end face of an electromagnetic coil (10), and is in abutting fit with an end face of a junction box (20); or the waterproof protrusion (40) is arranged on an end face of the junction box (20), and is in abutting fit with an end face of the electromagnetic coil (10); and a sealing member (50), located within the electrical connection region (30); wherein an outer peripheral surface of the sealing member (50) is in limiting fit with the internal fitting surfaces (41), and two corresponding end faces of the sealing member (50) are respectively in abutting fit with the end face of the electromagnetic coil (10) and the end face of the junction box (20), so as to seal a gap.

## Description

The present disclosure claims priority to patent application no. 202322171934.9, entitled "Waterproof Structure and Electromagnetic valve", and filed to the China National Intellectual Property Administration on August 11, 2023.

### Technical Field

The present disclosure relates to the technical field of electromagnetic valves, and in particular, to a waterproof structure and a electromagnetic valve.

### Background

At present, an existing electromagnetic valve usually includes a tab-type electromagnetic coil and a junction box which are electrically connected to each other, wherein the junction box plays a role of transition connection between the electromagnetic coil and a cable and bears a conduction function of a circuit. In order to ensure the circuit safety, a high requirement is imposed on the waterproof and dustproof performance between the electromagnetic coil and the junction box.

At present, for a common electromagnetic valve, after an electromagnetic coil and a junction box thereof are assembled, the sealing reliability at a joint of the two is not very good, and the seal between the junction box and an end face where tabs of the electromagnetic coil are located is prone to failure, allowing moisture to penetrate and cause a short circuit, thereby causing safety accidents such as burn-out of the electromagnetic coil.

In order to improve the waterproof and dustproof performance between the electromagnetic coil and the junction box, a sealing gasket is generally added between the junction box and the electromagnetic coil to achieve sealing. As a surface of the junction box that mates with the sealing gasket and a surface of the electromagnetic coil that mates with the sealing gasket are both planar structures, the two are sealed only by the sealing gasket, and the sealing effect is not good.

### Summary

The present disclosure provides a waterproof structure and a electromagnetic valve, so as to solve a problem of poor sealing performance between an electromagnetic coil and a junction box in the related art.

In order to solve the problem, according to one aspect of the present disclosure, provided is a waterproof structure, wherein the waterproof structure is used for sealing a gap between an electromagnetic coil and a junction box, and an electrical connection region is provided between the electromagnetic coil and the junction box, and the waterproof structure includes: at least one waterproof protrusion, having an internal fitting surface facing the electrical connection region; wherein the at least one waterproof protrusion is arranged on an end face of the electromagnetic coil, and is in abutting fit with an end face of the junction box; or the at least one waterproof protrusion is arranged on an end face of the junction box, and is in abutting fit with an end face of the electromagnetic coil; and a sealing member, located within the electrical connection region; wherein an outer peripheral surface of the sealing member is in limiting fit with the internal fitting surface, and two corresponding end faces of the sealing member are respectively in abutting fit with the end face of the electromagnetic coil and the end face of the junction box, so as to seal the gap.

Further, each of the at least one waterproof protrusion is an annular protrusion, and the internal fitting surface of the annular protrusion is an annular surface; an outer dimension of the sealing member is adapted to a dimension of the annular surface; and the sealing member is made of an elastic material.

Further, the annular protrusion is a cuboid protrusion, interior of the cuboid protrusion has the annular surface, the annular surface includes a first inner wall, a second inner wall, a third inner wall and a fourth inner wall which are connected end to end, the first inner wall and the third inner wall are oppositely arranged, and the second inner wall and the fourth inner wall are oppositely arranged; and the sealing member is a cuboid member, and four outer vertical faces in a circumferential direction of the cuboid member are in abutting fit with the first inner wall, the second inner wall, the third inner wall and the fourth inner wall, respectively.

Further, a joint of the first inner wall and the second inner wall, a joint of the first inner wall and the fourth inner wall, a joint of the second inner wall and the second inner wall, and a joint of the second inner wall and the fourth inner wall are all rounded.

Optionally, each of the at least one waterproof protrusion includes a horizontal protrusion and two vertical protrusions respectively provided at two ends of the horizontal protrusion, and the horizontal protrusion and the two vertical protrusions form a U-shaped structure; and a wall surface of the horizontal protrusion facing the electrical connection region is connected to wall surfaces of the two vertical protrusions facing the electrical connection region respectively, to form the internal fitting surface.

Optionally, two of the at least one waterproof protrusion are provided; the two waterproof protrusions are correspondingly provided on the end face of the electromagnetic coil; or, the two waterproof protrusions are correspondingly provided on the end face of the junction box; or one of the two waterproof protrusions is arranged on the end face of the electromagnetic coil, an other of the two waterproof protrusions is arranged on the end face of the junction box, and the two waterproof protrusions are correspondingly arranged.

According to another aspect of the present disclosure, provided is a electromagnetic valve, the electromagnetic valve including the electromagnetic coil, the junction box, and the waterproof structure, wherein the waterproof structure seals the gap between the electromagnetic coil and the junction box.

Further, the at least one waterproof protrusion is arranged on an end face of the electromagnetic coil, the end face of the junction box is provided with a fitting protrusion, the at least one waterproof protrusion is provided with an external fitting surface away from the internal fitting surfaces, and the external fitting surface is in interference fit with an inner wall of the fitting protrusion.

Further, the electromagnetic valve further includes multiple conductive tabs, and the multiple conductive tabs are fixedly provided on the electromagnetic coil; two ends of each of the multiple conductive tabs are respectively electrically connected to the electromagnetic coil and the junction box; and the sealing member is provided with multiple through holes, and the multiple conductive tabs pass through the multiple through holes in a one-to-one correspondence.

Further, the electromagnetic valve further includes a fixing member, and two ends of the fixing member are respectively connected to the electromagnetic coil and the junction box, so as to fix the electromagnetic coil and the junction box relative to each other; and the sealing member is provided with a mounting through hole, and the fixing member passes through the mounting through hole.

By applying the technical solutions of the present disclosure, a waterproof structure is provided, wherein the waterproof structure is used for sealing a gap between an electromagnetic coil and a junction box, and an electrical connection region is provided between the electromagnetic coil and the junction box, and the waterproof structure includes: at least one waterproof protrusion, having an internal fitting surface facing the electrical connection region; wherein the at least one waterproof protrusion is arranged on an end face of the electromagnetic coil, and is in abutting fit with an end face of the junction box; or the at least one waterproof protrusion is arranged on an end face of the junction box, and is in abutting fit with an end face of the electromagnetic coil; and a sealing member, located within the electrical connection region; wherein an outer peripheral surface of the sealing member is in limiting fit with the internal fitting surface, and two corresponding end faces of the sealing member are respectively in abutting fit with the end face of the electromagnetic coil and the end face of the junction box, so as to seal the gap.

In the present disclosure, by cooperation between the at least one waterproof protrusion and the sealing member, the gap between the electromagnetic coil and the junction box is effectively sealed, thereby improving the waterproof and dustproof performance between the electromagnetic coil and the junction box, and avoiding the occurrence of safety accidents such as burn-out of the electromagnetic coil due to a short circuit caused by penetration of moisture. Compared with a current situation that a surface of the junction box that mates with a sealing gasket and a surface of the electromagnetic coil that mates with the sealing gasket are both planar structures and the two planar structures are sealed only by the sealing gasket, in the present disclosure, by combination of three sealing ways, i.e. limiting fit between the outer peripheral surface of the sealing member and the internal fitting surface, abutting fit between two end faces corresponding to the sealing member and the end face of the electromagnetic coil and the end face of the junction box, and abutting fit between the at least one waterproof protrusion and the junction box or the electromagnetic coil, the sealing performance of the electrical connection region is further enhanced, and the waterproof performance is further improved. The present disclosure has a simple structure, has a good sealing effect in practical use, and is suitable for promotion and use.

### Brief Description of the Drawings

The drawings of the description, constituting a part of the present disclosure, are used for providing further understanding of the present disclosure, and the illustrative embodiments of the present disclosure and illustrations thereof are used for explaining the present disclosure, rather than constitute inappropriate limitation on the present disclosure. In the drawings:
Fig. 1 shows a fully sectional view showing a partial structure of a electromagnetic valve in a main viewing angle provided according to an embodiment of the present disclosure;
Fig. 2 shows an external schematic diagram of a partial structure of a electromagnetic valve provided according to an embodiment of the present disclosure;
Fig. 3 shows a fully sectional view showing a partial structure of a electromagnetic valve in a top viewing angle provided according to an embodiment of the present disclosure;
Fig. 4 shows a schematic diagram of a partial structure of an electromagnetic coil and a waterproof protrusion provided according to an embodiment of the present disclosure.
Fig. 5 shows a schematic diagram of a specific structure of a sealing member provided according to an embodiment of the present disclosure;
Fig. 6 shows a schematic diagram of a partial structure of a waterproof protrusion and a sealing member after being assembled on an electromagnetic coil provided according to an embodiment of the present disclosure; and
Fig. 7 shows a schematic partially enlarged view of positions of a waterproof protrusion and a sealing member provided according to an embodiment of the present disclosure.

The figures include the following reference signs:
10. Electromagnetic coil;
20. Junction box; 21. Fitting protrusion;
30. Electrical connection region;
40. Waterproof protrusion; 41. Internal fitting surface; 411. First inner wall; 412. Second inner wall; 413. Third inner wall; 414. Fourth inner wall; 42. External fitting surface;
50. Sealing member; 51. Through hole; 52. Mounting through hole;
60. Conductive tab;
70. Fixing member.

### Detailed Description of the Embodiments

Hereinafter, the technical solutions in embodiments of the present disclosure will be described clearly and completely with reference to the accompanying drawings of the embodiments of the present disclosure. Obviously, the embodiments as described are only some of the embodiments of the present disclosure, and are not all of the embodiments. The following description of at least one exemplary embodiment is merely illustrative in nature, and is in no way intended to limit the present disclosure and any applications or uses thereof. All other embodiments obtained by a person of ordinary skill in the art on the basis of the embodiments of the present disclosure without involving any inventive effort shall all fall within the scope of protection of the present disclosure.

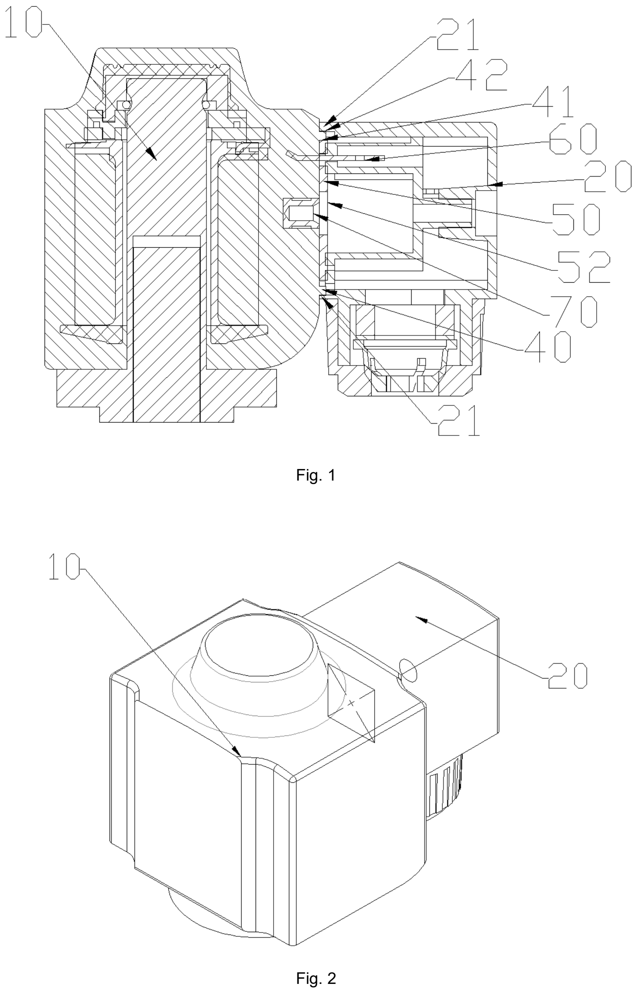

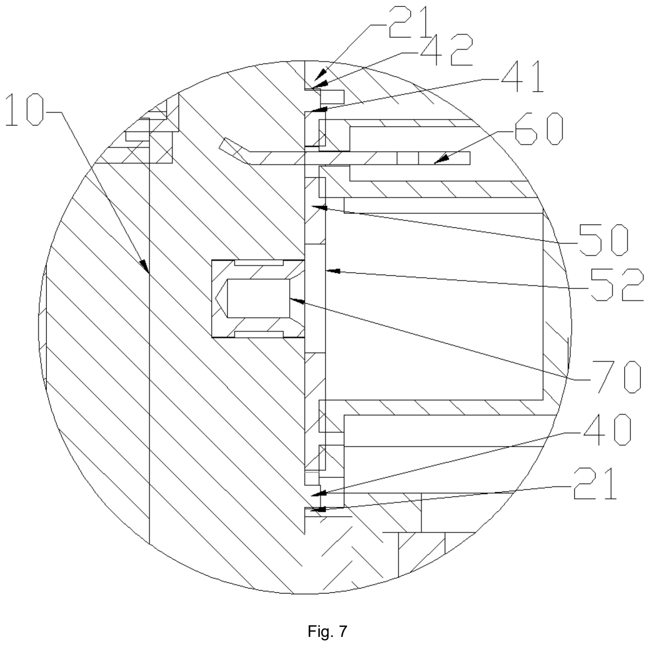

As shown in Figs. 1-7, some embodiments of the present disclosure provide a waterproof structure; the waterproof structure is used for sealing a gap between an electromagnetic coil 10 and a junction box 20, an electrical connection region 30 is provided between the electromagnetic coil 10 and the junction box 20, and the waterproof structure includes at least one waterproof protrusion 40 and a sealing member 50; the at least one waterproof protrusion 40 has an internal fitting surface 41 (as shown in figure 7) facing the electrical connection region 30; the at least one waterproof protrusion 40 is arranged on an end face of the electromagnetic coil 10, and is in abutting fit with an end face of the junction box 20; or the at least one waterproof protrusion 40 is arranged on an end face of the junction box 20, and is in abutting fit with an end face of the electromagnetic coil 10; the sealing member 50 is located within the electrical connection region 30 (for example, arranged around the electrical connection region 30); and an outer peripheral surface of the sealing member 50 is in limiting fit with the internal fitting surface 41, and two corresponding end faces of the sealing member 50 are respectively in abutting fit with the end face of the electromagnetic coil 10 and the end face of the junction box 20, so as to seal the gap.

In some embodiments of the present disclosure, by cooperation between the at least one waterproof protrusion 40 and the sealing member 50, the gap between the electromagnetic coil 10 and the junction box 20 is effectively sealed, thereby improving the waterproof and dustproof performance between the electromagnetic coil 10 and the junction box 20, and avoiding the occurrence of safety accidents such as burn-out of the electromagnetic coil 10 due to a short circuit caused by penetration of moisture. Compared with a current situation that a surface of the junction box 20 that mates with a sealing gasket and a surface of the electromagnetic coil 10 that mates with the sealing gasket are both planar structures and the two planar structures are sealed only by the sealing gasket, in the present disclosure, by combination of three sealing ways, i.e. limiting fit between the outer peripheral surface of the sealing member 50 and the internal fitting surface 41, abutting fit between two end faces corresponding to the sealing member 50 and the end face of the electromagnetic coil 10 and the end face of the junction box 20, and abutting fit between the at least one waterproof protrusion 40 and the junction box or the electromagnetic coil, the sealing performance of the electrical connection region 30 is further enhanced, and the waterproof performance is further improved. The present disclosure has a simple structure, has a good sealing effect in practical use, and is suitable for promotion and use.

In some specific embodiments of the present disclosure, the at least one waterproof protrusion 40 may be provided only on the end face of the electromagnetic coil 10 or the end face of the junction box 20, and the at least one waterproof protrusion 40 may be provided only on one side of the electrical connection region 30, and specifically, is provided on a path through which moisture penetrates into the electrical connection region 30, so as to shield foreign matters such as external moisture and dust from entering the electrical connection region 30. For example, moisture penetrates from above the electrical connection region 30 into the electrical connection region 30, then the at least one waterproof protrusion 40 is provided above the electrical connection region 30.

In addition, it should be noted that, in some other specific embodiments of the present disclosure, the electrical connection region 30 represents a region correspondingly formed by the end face of the electromagnetic coil 10 and the end face of the junction box 20 (for example, forming a region with a spatial cube structure, and a boundary of this region includes six planes, in which the end face of the electromagnetic coil 10 and the end face of the junction box 20 are two corresponding planes therein, and the remaining four planes form the gap and need to be sealed by the sealing member 50); and various electrical connection devices (for example, conductive tabs 60) necessary for a electromagnetic valve can pass through this region, the sealing member 50 is provided in the electrical connection region 30 and surrounds an outer side of the electrical connection region 30 (for example, surrounds the outer side of the remaining four planes of the spatial cube structure), so as to prevent foreign matters such as external moisture and dust from entering the electrical connection region 30.

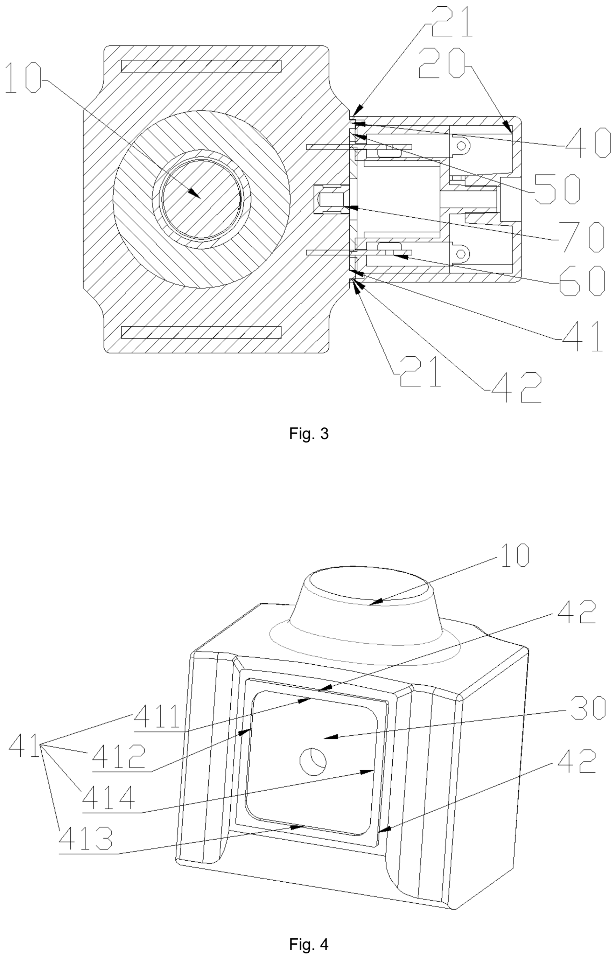

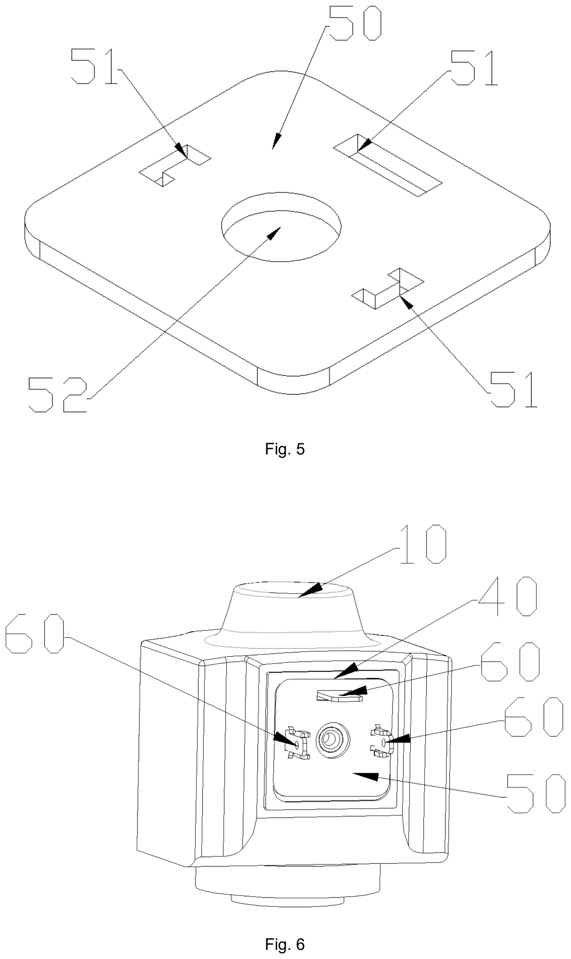

As shown in Figs. 4 and 6, each of the at least one waterproof protrusion 40 is an annular protrusion, and the internal fitting surface 41 of the annular protrusion is an annular surface. By configuring the each of the at least one waterproof protrusion 40 as the annular protrusion, circumferential sealing of the electric connection region 30 is ensured.

It should be noted that, in some specific embodiments of the present disclosure, a cross section (for example, an annular surface) of the annular protrusion may be a closed pattern surface such as a rectangular ring, a square ring, a diamond ring, an elliptical ring, and a circular ring, and a shape of the cross section of the annular protrusion may be flexibly set according to actual use requirements and processing technology requirements.

In some embodiments, an outer dimension of the sealing member 50 is adapted to a dimension of the annular surface; and the sealing member 50 is made of an elastic material. In this way, the sealing member 50 can be tightly fitted with the annular surface, the end face of the electromagnetic coil 10 and the end face of the junction box 20, thereby further ensuring the sealing effect.

As shown in Figs. 4 and 6, the annular protrusion is a cuboid protrusion, interior of the cuboid protrusion has the annular surface, the annular surface includes a first inner wall 411, a second inner wall 412, a third inner wall 413 and a fourth inner wall 414 which are connected end to end, the first inner wall 411 and the third inner wall 413 are oppositely arranged, and the second inner wall 412 and the fourth inner wall 414 are oppositely arranged; and the sealing member 50 is a cuboid member, and four outer vertical faces in the circumferential direction of the cuboid member are in abutting fit with the first inner wall 411, the second inner wall 412, the third inner wall 413 and the fourth inner wall 414, respectively. This arrangement not only ensures simple structures of the annular protrusion and the sealing member 50, facilitating subsequent processing and forming, but also ensures that the sealing effect meets actual use requirements.

Optionally, in some specific embodiments of the present disclosure, a height range of the at least one waterproof protrusion 40 is 1-2 mm.

As shown in Figs. 4, 5 and 6, a joint of the first inner wall 411 and the second inner wall 412, a joint of the first inner wall 411 and the fourth inner wall 414, a joint of the second inner wall 412 and the second inner wall 412, and a joint of the second inner wall 412 and the fourth inner wall 414 are all rounded. The rounding treatment not only facilitates reliable mounting of the sealing member 50, but also avoids a problem that the service life of the cuboid protrusion is shortened due to the stress concentration at the joints due to sharp corner structures. As shown in Fig. 5, correspondingly, four corners of the sealing member 50 are also correspondingly rounded, and size of rounded corners is the same as size of rounded corners at the joints.

Optionally, in some other embodiments not shown in the drawings of the present disclosure, each of the at least one waterproof protrusion 40 includes a horizontal protrusion and two vertical protrusions respectively provided at two ends of the horizontal protrusion, and the horizontal protrusion and the two vertical protrusions form a U-shaped structure; and a wall surface of the horizontal protrusion facing the electrical connection region 30 is connected to wall surfaces of the two vertical protrusions facing the electrical connection region 30 respectively, to form the internal fitting surface 41. By such arrangement, compared with the technical solution of the annular protrusion, a structure of the each of the at least one waterproof protrusion 40 is further simplified; of course, it is inevitable that the sealing property of the U-shaped structure may be inferior to that of the annular protrusion, and thus a flexible selection can be made according to practical requirements.

In some embodiment, an extension direction of the horizontal protrusion is perpendicular to extension directions of the two vertical protrusions.

In some embodiments, two of the at least one waterproof protrusion 40 are provided; the two waterproof protrusions 40 are correspondingly provided on the end face of the electromagnetic coil 10; or, the two waterproof protrusions 40 are correspondingly provided on the end face of the junction box 20; or one of the two waterproof protrusions 40 is arranged on the end face of the electromagnetic coil 10, an other of the two waterproof protrusions 40 is arranged on the end face of the junction box 20, and the two waterproof protrusions 40 are correspondingly arranged. By arranging the two U-shaped structures to cooperate with each other, the sealing effect for the electrical connection region 30 is further ensured.

It should be noted that the two waterproof protrusions 40 being correspondingly arranged, means that: the two waterproof protrusions 40 are arranged in a spatially staggered manner (i.e. the two waterproof protrusions 40 are not arranged oppositely, and after being connected, end faces of the two waterproof protrusions 40 are not attached to each other). For example, the two waterproof protrusions both adopt a U-shaped structure, and when the electromagnetic coil 10 is connected to the junction box 20, openings of the two U-shaped structures are opposite to each other and are not stacked, thereby integrally forming an approximately O-shaped structure to ensure sealing.

As shown in Figs. 1, 2 and 3, the present disclosure further provides a electromagnetic valve, wherein the electromagnetic valve includes the electromagnetic coil 10, the junction box 20 and the aforementioned waterproof structure, and the waterproof structure seals the gap between the electromagnetic coil 10 and the junction box 20. The electromagnetic valve provided in this way has a simple structure and reliable operation, and effectively avoids the occurrence of safety accidents such as burn-out of the electromagnetic coil 10 due to a short circuit caused by penetration of moisture.

As shown in Fig. 1, Fig. 3, Fig. 4, Fig. 6 and Fig. 7, the at least one waterproof protrusion 40 is arranged on an end face of the electromagnetic coil 10, the end face of the junction box 20 is provided with a fitting protrusion 21, the at least one waterproof protrusion 40 is provided with an external fitting surface 42 away from the internal fitting surfaces 41, and the external fitting surface 42 is in interference fit with an inner wall of the fitting protrusion 21. By providing the fitting protrusion 21, the at least one waterproof protrusion 40 can be reliably limited, which not only facilitates the centering and plugging of the electromagnetic coil 10 and the junction box 20, but also further improves the sealing effect for the electrical connection region 30. By configuring the external fitting surface 42 to be in interference fit with the inner wall of the fitting protrusion 21, the connection strength between the fitting protrusion 21 and the at least one waterproof protrusion 40 is ensured, and a problem that water or dust enters the electrical connection region 30 from the gap between the fitting protrusion 21 and the waterproof protrusions 40 is further avoided.

Optionally, in some other embodiments not shown in the drawings of the present disclosure, the fitting protrusion 21 on the end face of the junction box 20 and the at least one waterproof protrusion 40 on the end face of the electromagnetic coil 10 can both be integrally formed by injection molding, so as to facilitate processing.

As shown in Figs. 1, 3 and 6, the electromagnetic valve further includes multiple conductive tabs 60, and the multiple conductive tabs 60 are fixedly provided on the electromagnetic coil 10; two ends of each of the multiple conductive tabs 60 are respectively electrically connected to the electromagnetic coil 10 and the junction box 20; and the sealing member 50 is provided with multiple through holes 51, and the multiple conductive tabs 60 pass through the multiple through holes 51 in a one-to-one correspondence. By configuring the multiple through holes 51 to cooperate with the multiple conductive tabs 60 (for example, sealing fit or clearance fit), the working reliability of the multiple conductive tabs 60 is ensured.

As shown in Figs. 1, 3 and 6, in some specific embodiments of the present disclosure, there are three conductive tabs 60. The sealing member 50 is provided with three through holes 51, and a size of each of the three through holes 51 is adapted to a size of a corresponding conductive tab 60 of the three conductive tabs 60; and the mounted junction box 20 at least squeezes the vicinity of the through holes 51 in the sealing member 50, to improve the sealing effect.

As shown in Figs. 1, 3 and 6, the electromagnetic valve further includes a fixing member 70, and two ends of the fixing member 70 are respectively connected to the electromagnetic coil 10 and the junction box 20, so as to fix the electromagnetic coil 10 and the junction box 20 relative to each other; and the sealing member 50 is provided with a mounting through hole 52, and the fixing member 70 passes through the mounting through hole 52. By configuring the mounting through hole 52 to fit with the fixing member 70 (for example, which may be sealing fit or clearance fit), the working reliability of the fixing member 70 is ensured.

In conclusion, some embodiments of the present disclosure provide a waterproof structure and a electromagnetic valve, in some embodiments of the present disclosure, by cooperation between the at least one waterproof protrusion 40 and the sealing member 50, the gap between the electromagnetic coil 10 and the junction box 20 is effectively sealed, thereby improving the waterproof and dustproof performance between the electromagnetic coil 10 and the junction box 20, and avoiding the occurrence of safety accidents such as burn-out of the electromagnetic coil 10 due to a short circuit caused by penetration of moisture. Compared with a current situation that a surface of the junction box 20 that mates with a sealing gasket and a surface of the electromagnetic coil 10 that mates with the sealing gasket are both planar structures and the two planar structures are sealed only by the sealing gasket, in the present disclosure, by combination of three sealing ways, i.e. limiting fit between the outer peripheral surface of the sealing member 50 and the internal fitting surface 41, abutting fit between two end faces corresponding to the sealing member 50 and the end face of the electromagnetic coil 10 and the end face of the junction box 20, and abutting fit between the at least one waterproof protrusion 40 and the junction box or the electromagnetic coil, the sealing performance of the electrical connection region 30 is further enhanced, and the waterproof performance is further improved. The present disclosure has a simple structure, has a good sealing effect in practical use, and is suitable for promotion and use.

The content above merely relates to preferred embodiments of the present disclosure, and is not intended to limit the present disclosure. For a person skilled in the art, the present disclosure may have various modifications and changes. Any modifications, equivalent replacements, improvements and the like made within the spirit and principle of the present disclosure shall all fall within the scope of protection of the present disclosure.

## Claims

1. A waterproof structure, wherein the waterproof structure is used for sealing a gap between an electromagnetic coil (10) and a junction box (20), and an electrical connection region (30) is provided between the electromagnetic coil (10) and the junction box (20), and the waterproof structure comprises:
at least one waterproof protrusion (40), having an internal fitting surface (41) facing the electrical connection region (30); wherein the at least one waterproof protrusion (40) is arranged on an end face of the electromagnetic coil (10), and is in abutting fit with an end face of the junction box (20); or the at least one waterproof protrusion (40) is arranged on an end face of the junction box (20), and is in abutting fit with an end face of the electromagnetic coil (10); and
a sealing member (50), located within the electrical connection region (30); wherein an outer peripheral surface of the sealing member (50) is in limiting fit with the internal fitting surface (41), and two corresponding end faces of the sealing member (50) are respectively in abutting fit with the end face of the electromagnetic coil (10) and the end face of the junction box (20), so as to seal the gap.

2. The waterproof structure according to claim 1, wherein each of the at least one waterproof protrusion (40) is an annular protrusion, and the internal fitting surface (41) of the annular protrusion is an annular surface; an outer dimension of the sealing member (50) is adapted to a dimension of the annular surface; and the sealing member (50) is made of an elastic material.

3. The waterproof structure according to claim 2, wherein the annular protrusion is a cuboid protrusion, interior of the cuboid protrusion has the annular surface, the annular surface comprises a first inner wall (411), a second inner wall (412), a third inner wall (413) and a fourth inner wall (414) which are connected end to end, the first inner wall (411) and the third inner wall (413) are oppositely arranged, and the second inner wall (412) and the fourth inner wall (414) are oppositely arranged; and the sealing member (50) is a cuboid member, and four outer vertical faces in a circumferential direction of the cuboid member are in abutting fit with the first inner wall (411), the second inner wall (412), the third inner wall (413) and the fourth inner wall (414), respectively.

4. The waterproof structure according to claim 3, wherein a joint of the first inner wall (411) and the second inner wall (412), a joint of the first inner wall (411) and the fourth inner wall (414), a joint of the second inner wall (412) and the second inner wall (412), and a joint of the second inner wall (412) and the fourth inner wall (414) are all rounded.

5. The waterproof structure according to claim 1, wherein each of the at least one waterproof protrusion (40) comprises a horizontal protrusion and two vertical protrusions respectively provided at two ends of the horizontal protrusion, and the horizontal protrusion and the two vertical protrusions form a U-shaped structure; and a wall surface of the horizontal protrusion facing the electrical connection region (30) is connected to wall surfaces of the two vertical protrusions facing the electrical connection region (30) respectively, to form the internal fitting surface (41).

6. The waterproof structure according to claim 1, wherein two of the at least one waterproof protrusions (40) are provided; the two waterproof protrusions (40) are correspondingly provided on the end face of the electromagnetic coil (10); or, the two waterproof protrusions (40) are correspondingly provided on the end face of the junction box (20); or one of the two waterproof protrusions (40) is arranged on the end face of the electromagnetic coil (10), an other of the two waterproof protrusions (40) is arranged on the end face of the junction box (20), and the two waterproof protrusions (40) are correspondingly arranged.

7. A electromagnetic valve, the electromagnetic valve comprising the electromagnetic coil (10), the junction box (20), and the waterproof structure according to any one of claims 1-6, wherein the waterproof structure seals the gap between the electromagnetic coil (10) and the junction box (20).

8. The electromagnetic valve according to claim 7, wherein the at least one waterproof protrusion (40) is arranged on an end face of the electromagnetic coil (10), the end face of the junction box (20) is provided with a fitting protrusion (21), the at least one waterproof protrusion (40) is provided with an external fitting surface (42) away from the internal fitting surfaces (41), and the external fitting surface (42) is in interference fit with an inner wall of the fitting protrusion (21).

9. The electromagnetic valve according to claim 8, wherein the electromagnetic valve further comprises multiple conductive tabs (60), and the multiple conductive tabs (60) are fixedly provided on the electromagnetic coil (10); two ends of each of the multiple conductive tabs (60) are respectively electrically connected to the electromagnetic coil (10) and the junction box (20); and the sealing member (50) is provided with multiple through holes (51), and the multiple conductive tabs (60) pass through the multiple through holes (51) in a one-to-one correspondence.

10. The electromagnetic valve according to claim 8, wherein the electromagnetic valve further comprises a fixing member (70), and two ends of the fixing member (70) are respectively connected to the electromagnetic coil (10) and the junction box (20), so as to fix the electromagnetic coil (10) and the junction box (20) relative to each other; and the sealing member (50) is provided with a mounting through hole (52), and the fixing member (70) passes through the mounting through hole (52).
